# EUROPEAN PATENT APPLICATION

(11) **EP 4 636 244 A1**
(43) Date of publication of application: **22.10.2025**
(21) Application number: 24171090.4
(22) Date of filing: 18.04.2024
(51) Int. Cl.: F03D 13/40

(54) **MODULAR TRANSPORT SYSTEM FOR WIND TURBINE COMPONENTS**

(71) Applicant: Scan Global Logistics A/S, 2650 Hvidovre (DK)
(72) Inventor: Moss, Mads, 2650 Hvidovre (DK); Plotnikov, Kirill, 7100 Vejle (DK)
(74) Representative: Patrade A/S

(57) **Abstract**

One objective of the invention is to provide a modular transport system (1) for supporting a wind turbine component arranged in a wind turbine support equipment during transport and storage, wherein the modular transport system (1) comprises:
- a base support (10) configured for distributing a load onto a surface at a first end (11), wherein the base support (10) comprises a plurality of coupling interfaces (40) arranged at a second end (12) being opposite to the first end (11) and wherein the coupling interfaces (40) are configured for releasably interlocking with another plurality of coupling interfaces (40);
- two side sections (20) each comprising a plurality of coupling interfaces (40) arranged at a third end (21) of the side section (20) and another plurality of coupling interfaces (40) arranged at a fourth end (22) being opposite to the third end (21), wherein the third end (21) and the fourth end (22) are separated by a side section length; and
- a top support (30) comprising a plurality of coupling interfaces (40) arranged at a fifth end (31) and a top cover (35) arranged at a sixth end (32) being opposite to the fifth end (31) and wherein the top cover (35) is configured for supporting the wind turbine support equipment,
wherein the top support (30) is configured for being connected to the two side sections (20), and wherein the two side sections (20) are configured for being connected to the base support (10) with a side section width measured perpendicular to the side section length separating the two side sections (20) so that a further wind turbine component can be arranged in-between the side sections (20).

## Description

### Field of the Invention

The present invention relates to transport and storage systems for supporting wind turbine components such as wind turbine blades, rotors and tower sections during transport and storage of the components.

### Background of the Invention

One challenge when transporting and storing large and especially long elongated objects, such as wind turbine components, is that the area required during transport or storage is very large. This makes transporting and storing a plurality of wind turbine components expensive. A further challenge is that wind turbine components require custom-made support equipment specifically made to the size and specification of a wind turbine component in order to safely transport and store the wind turbine component. As such, one downside is that when a new wind turbine component needs to be transported and/or stored, the wind turbine support equipment needs to be changed and/or replaced.

Due to these challenges providing a system which is customised for a single wing type and which can also optimise the amount of wind turbine components stored in a relatively small area is often infeasible and/or expensive.

### Object of the Invention

One objective of the present disclosure is to achieve a transport and storage system for a wind turbine component, wherein the system is able to accommodate a wide range of different shapes and sizes of wind turbine components, such as wind turbine wings, rotors, nacelles and tower parts.

A further objective is to achieve a transport and storage system which is compact, so that more wind turbine components can be stored on a limited space, e.g. on the deck of a vessel.

A further objective is to achieve a transport and storage system which enables the wind turbine components to be stacked, so that the arial footprint required for the system and wind turbine components is reduced while multiple components are stored vertically.

A further objective is to achieve a transport and storage system which can be disassembled and stored, so that it takes up less space when not being used for transport or storage of wind turbine components.

### Description of the Invention

One objective of the invention is achieved by a modular transport system for supporting a wind turbine component arranged in a wind turbine support equipment during transport and storage, wherein the modular transport system comprises:
- a base support configured for distributing a load onto a surface at a first end, wherein the base support comprises a plurality of coupling interfaces arranged at a second end being opposite to the first end and wherein the coupling interfaces are configured for releasably interlocking with another plurality of coupling interfaces;
- two side sections each comprising a plurality of coupling interfaces arranged at a third end of the side section and another plurality of coupling interfaces arranged at a fourth end being opposite to the third end, wherein the third end and the fourth end are separated by a side section length; and
- a top support comprising a plurality of coupling interfaces arranged at a fifth end and a top cover arranged at a sixth end being opposite to the fifth end and wherein the top cover is configured for supporting a load,
wherein the top support is configured for being connected to the two side sections, and wherein the two side sections are configured for being connected to the base support with a side section width measured perpendicular to the side section length separating the two side sections so that a further wind turbine component can be arranged in-between the side sections.

In this disclosure, the wind turbine component may be a wind turbine wing, a rotor, a nacelle and/or a tower part.

The surface where the base support is arranged may be but is not limited to the floor of a factory or storage facility, the ground of a field, the bed of a lorry trailer or rail car, the deck of a vessel, etc.

The side section length may be arranged along a vertical axis, i.e., in a direction parallel to the direction of gravity. The side section width arranged perpendicular to the side section length may be arranged parallel to a horizontal axis.

In one aspect, the first end and the second end of the base support may be separated by a base length, so that the second end is raised above the surface.

The base support may be adapted for supporting a wind turbine support equipment, wherein the wind turbine support equipment is configured for supporting and retaining a wind turbine equipment. The wind turbine support equipment may e.g., be a cradle, saddle, a clamp, a root end mount for bolting a plurality of fasteners to a root end of a wind turbine blade, etc.

The wind turbine support equipment may be arranged on the surface and may be surrounded by the base support, so that the wind turbine component passes through in-between the two side sections. In a further aspect, the wind turbine support equipment may be arranged on the surface adjacent to the base support, so that the wind turbine component passes through in-between the two side sections.

The top support and/or the top cover may be adapted for supporting a wind turbine support equipment and/or the wind turbine support equipment may be arranged and fastened to the top support and/or the top cover. As such an advantage is achieved, because the wind turbine components may be easily stackable by using one or more modular transport systems. The modular transport system may therefore be used universally with any wind turbine support equipment and may enable the wind turbine support equipment and the wind turbine component to be stacked, so that more wind turbine components can be transported and stored at once without consuming more space. In one example, twice as many wind turbine components may be transported and stored on the same area, when the wind turbine components are stacked in two layers with the use of the modular transport system of the present disclosure.

In one aspect, the coupling interfaces of the base support may be configured to be connected to the coupling interfaces of the side sections and/or the top support. The coupling interfaces are connected by releasably interlocking the coupling interfaces. One advantage of connecting the coupling interfaces is that the forces applied onto the top support and/or the side sections are transferred down into the base support and spread out onto the surface. A further advantage is that the stability of the side sections and the top support is improved.

One advantage of providing two side sections separated by a side section width and each side section being connected to the base support and the top support, is that the modular transport system may be in a square shape, wherein at least two edges of the square shape are parallel to the side sections and the two other edges are substantially parallel to the surface and to the top cover, wherein the square shape provides a stable and strong construction.

In one example, the coupling interfaces of the base support arranged at the second end may be connected to the coupling interfaces of the side sections arranged at the third end, and the coupling interfaces of the side sections arranged at the fourth end may be connected with the coupling interfaces of the top support arranged at the fifth end.

In another example, the coupling interfaces of the base support arranged at the second end may be connected to the coupling interfaces of the top support arranged at the fifth end.

The side sections are preferably separated by a side section width, so that a further wind turbine component and/or a wind turbine support equipment can be arranged in-between the side sections. Furthermore, the side section length may be adapted so that the wind turbine component and/or wind turbine support equipment can be arranged in-between the second end of the base support and the fifth end of the top support. Thus, the modular transport system enables a plurality of wind turbine components to be stacked and arranged nearby each other.

In one aspect, the wind turbine component and/or the wind turbine support equipment may be arranged on the top cover of the top support.

In a further embodiment of the modular transport system, the system comprises a plurality of twistlocks and the coupling interfaces are corner castings, wherein the coupling interfaces are releasably interlocked by the twistlocks being configured for being in an unlocked position and a locked position.

The corner castings and/or the twistlocks may be according to the ISO1161 standard or it may be any other corner castings and twistlocks known in the shipping industry.

One advantage of corner castings and twistlocks is that the interlocked connection is strong, reliable and any parts of the corner casting and twistlocks are easily replaceable as the parts are readily available in case of defects.

One advantage of using corner castings and twistlocks is that the connection of the base support, side sections and top support is easy.

In one aspect the twistlocks may be double-sided twistlocks, i.e., the double sided twistlocks can connect two coupling interfaces and/or corner castings together.

In a further embodiment of the modular transport system, a plurality of coupling interfaces being arranged at the second end of the base support and/or at the fourth end of the side sections comprise a permanent twistlock being configured for releasably interlocking the side sections to the base support and/or the top support to the side sections.

One advantage of arranging a permanent twistlocks at the coupling interfaces of the base support at the second end and the coupling interfaces of the side sections at the fourth end saves material because corner castings are not required at the aforementioned coupling interfaces. A further advantage is that connection of coupling interfaces is easier because a twistlock does not need to be moved or replaced.

In a further embodiment of the modular transport system, each side section is made of at least two side beams arranged parallel along the side section length and separated by a side section spacing being perpendicular to the side section length and the side section width, wherein at least one third side beam is arranged between the two side beams and arranged perpendicular to the two side beams.

One advantage of the third side beam is that it improves the stability and strength of the side section.

In one aspect, the third side beam may be arranged substantially near the third end, the fourth end or in-between the third and fourth end.

In a further aspect, an additional third side beam may be arranged between the two side beams, so that two third side beams are arranged between the two side beams of the side section, e.g., one substantially near the third end and another substantially near the fourth end. The two third side beams may form a rigid frame by comprising at least one frame square, wherein the frame square comprises the two side beams and the two third side beams.

In a further embodiment of the modular transport system, the base support, the side sections and/or the top support is made of a plurality of beams arranged in a rigid frame, wherein the rigid frame comprises at least one frame square constructed of at least four beams, wherein one or more frame squares are arranged perpendicular and/or parallel to each other.

In one aspect, the beams assembled in each of the base support, the side sections and/or the top support are assembled or connected by being welded together. In another aspect, the beams may be attached by fasteners. In a further aspect, the at least four beams being part of each frame square are assembled or connected by welding, and the frame squares may also be assembled or connected by welding.

One advantage of providing the beams in frame squares and connecting a plurality of frame squares perpendicular and/or parallel to each other, i.e., so a box shape is formed, is that the strength and stability of the base support, side sections and top support is increased while the amount of material required for a given strength and stability, i.e., thickness of the material, is reduced.

In a further embodiment of the modular transport system, the side sections comprise at least two first trusses supporting the side section at the third end and at least two second trusses supporting the side section at the fourth end, wherein the first and second trusses extend outwards from the side section length and towards the respective third and fourth end.

One advantage of arranging the trusses is that the stability and strength of the side sections is increased.

In one aspect the first trusses and second trusses may be of the flat truss type.

In another aspect, the first trusses and the second trusses extend from each of the two side beams of the side section and towards the third end and the fourth end, respectively. In another aspect, the first and second trusses may be arranged with an angle of substantially 45 degrees to the two side beams, wherein the angle is measured between the truss and the side beam.

In a further embodiment of the modular transport system, the first trusses and the second trusses each comprise coupling interface arranged at the third end and the fourth end, respectively.

In one aspect, the coupling intetfaces arranged on each first truss and each second truss are configured for being connected with the coupling interfaces of the base support and the top support, respectively.

The coupling interfaces being arranged on the first trusses and the second trusses enables the side sections to be more stable because a further contact point or connection point is provided to the base support. Furthermore, a further contact point or connection point is provided to the top support which further increases the stability and carrying capacity of the top support.

In one example, each side section may have four contact points, i.e., coupling interfaces, to both the base support and the top support. I.e., two contact points may be coupling interfaces arranged on each end of the two side beams and a coupling interface arranged on each of the first and second trusses.

In a further embodiment of the modular transport system, the base support comprises one or more base trusses configured for distributing the load onto the surface.

The base trusses distribute the load onto a greater surface area while taking up less space above the base trusses. One advantage is that the system is more modular when deployed on a ship during high seas and the system may require less material to produce.

In one aspect, the base trusses may be arranged with an angle of 45 degrees measured between the surface and a vertical axis being substantially parallel to the side section length. In another aspect the base trusses may be welded onto a beam of the base support being arranged parallel to the surface and another beam being arranged perpendicular to the surface.

In a further embodiment of the modular transport system, the top support comprises one or more top trusses configured for distributing a load of the wind turbine component on the top cover onto the second connectors of the top support.

In one aspect, the top cover of the top support may be wide than the plurality of coupling interfaces arranged at the fifth end.

The top trusses distribute the load of the wind turbine component onto a smaller surface area while taking up less space below the top trusses. One advantage is that the system may require less material to produce.

In one aspect, the top trusses may be arranged with an angle of 45 degrees measured between a plane spanning the top cover and a vertical axis being substantially parallel to the side section length. In another aspect the top trusses may be welded onto a beam of the top support being arranged parallel to the plane of the top cover and another beam being arranged perpendicular to the plane of the top cover.

In a further embodiment of the modular transport system, the one or more beams, the third side beams, the first trusses, the second trusses, the base trusses and/or the top trusses are made of I-beams or H-beams.

One advantage of sing I-beams or H-beams is that the strength to weight ratio of the beams and trusses are increased, which may also yield a reduction in material costs.

In one aspect, the I-beams or H-beams may be according to but is not limited to the EN 10024, EN10034, EN 10162 and/or DIN 1025-5 standards. In another aspect, the H-beams may be a HEB beam.

In another aspect, the beams and trusses may be made in hollow profiles, e.g., round profiles or substantially square profiles. One advantage of hollow profiles is that it also has a good strength to weight ratio.

### [Desc: H-beams etc. Allows the weight and material costs to be optimised]

In a further embodiment of the modular transport system, the beams, third side beams, the first trusses, the second trusses, the base trusses and/or the top trusses are made of steel.

One advantage of making the beams and/or trusses in steel is that the beams and trusses may be welded together. A further advantage is that steel is strong, hard and durable. A further advantage is that the material costs are less than other metals of comparable strength and that steel is recyclable. A further advantage is that steel is malleable and can therefore bend without splitting.

In one aspect the steel may be stainless steel or may be treated after being welded together to have anti-corrosive properties.

In another aspect, the one or more beams, the third beams, the first trusses, the second trusses, the base trusses and/or the top trusses may be made of different metals/materials,

In a further embodiment of the modular transport system, the top support is adapted for being connected to the base support.

The top support may be adapted for being connected to the base support, by the coupling interfaces of the top support and the base support being connected together.

One advantage of connecting the top support to the base support is that a wind turbine support equipment may be arranged ontop of the top cover of the top support, wherein the wind turbine support equipment will be arranged at an intermediate height being less than a full height, wherein the full height is when the top support is arranged onto the side sections.

The modular transport system according to any one of the preceding claims, wherein the base support, the side sections and/or the top support are disassembled and packed in a container.

The modular transport system may be disassembled by unlocking the coupling interfaces and taking apart the top support from the side sections and the side sections from the base support.

In one aspect a container may be any suitable container for transporting the disassembled modular transport system. In one aspect the container may be a standard shipping container, e.g., a 10-foot, 20-foot or 40-foot container; an open-top container; or flat rack container.

One advantage of disassembling and packing the modular transport system into a container is that it is easy to ship, move around and store multiple modular transport systems.

In one example, a vehicle or vessel may be loaded with a plurality of wind turbine components stored on a plurality of modular transport systems when leaving one place. Then after delivering the wind turbine components, the modular transport system my be disassembled and packed in a container so that an area of the shipping vehicle or vessel is usable for storing other items on the return route.

### Description of the Drawing

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
Fig. 1a illustrates one embodiment of a modular transport system.
Fig. 1b illustrates one embodiment of a modular transport system wherein four parts of the system are separated.
Fig. 1c illustrates one embodiment of a modular transport system.
Fig. 2a-2c illustrates embodiments of the base support of the modular transport system.
Fig. 3a-3c illustrates embodiments of the side sections of the modular transport system.
Fig. 4a-4c illustrates embodiments of the top support of the modular transport system.
Fig. 5a & 5b illustrates one embodiment of the modular transport system.
Fig. 6 illustrates one embodiment of the coupling interface and twistlock.
Fig. 7a & 7b illustrates one embodiment of wind turbine components supported by the modular transport system.
Fig. 8a & 8b illustrates one embodiment of wind turbine components supported by the modular transport system.
Fig. 9a & 9b illustrates one embodiment of wind turbine components supported by the modular transport system.
Fig. 10a-10h illustrates embodiments of parts of the modular transport system arranged in containers.

### Detailed Description of the Invention

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

| **Reference:** | **Reference number:** |
|---|---|
| Modular transport system | 1 |
| Wind turbine component | 2 |
| Wind turbine support equipment | 4 |
| Base support | 10 |
| Surface | 5 |
| First end | 11 |
| Coupling interfaces | 40 |
| Corner casting | 41 |
| Second end | 12 |
| Side sections | 20 |
| Third end | 21 |
| Fourth end | 22 |
| Side section length | 27 |
| Top support | 30 |
| Fifth end | 31 |
| Top cover | 35 |
| Sixth end | 32 |
| Side section width | 28 |
| Further wind turbine component | 3 |
| Twistlocks | 50 |
| Corner castings | 41 |
| Two side beams | 23 |
| Third side beam | 29 |
| Beams | 13, 33 |
| Rigid frame | 16, 26, 36 |
| U-frame | 26' |
| Frame square | 60 |
| First trusses | 24 |
| Second trusses | 25 |
| Base trusses | 14 |
| Top trusses | 34 |
| Container | 6 |
| Open-top container | 7 |

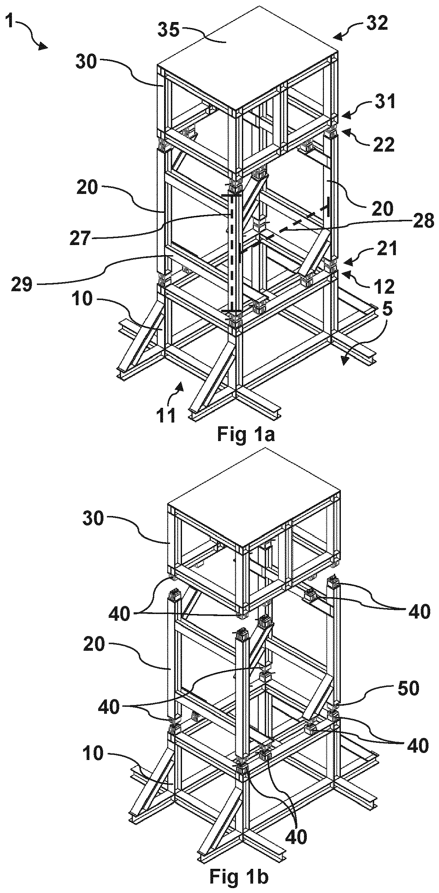

Figure 1a illustrates one embodiment of a modular transport system 1 comprising a base support 10 arranged on a surface 5 at a first end 11 and having a second end 12 opposite the first end 11. The base support 10 is connected to two side sections 20 by coupling interfaces (not shown here).

The two side sections 20 each have a third end 21 where each side section 20 connect to the base support 10, and an opposite fourth end 22 where each side section 20 connect to a top support 30. Each side section 20 has a side section height 27 measured between the third end 21 and the fourth end 22. Furthermore, the side sections 20 are separated when connected to the base support 10 and the top support 30 by a side section width 28, wherein the side section width 28 is measured perpendicular to the side section length 27 and in-between the two side sections 20. A spacing being arranged between the two side sections 20 when the side sections 20 are connected to the base support 10 and the top support 30 may allow a wind turbine component (not shown here) to pass through the spacing.

The top support 30 has a fifth end 31 where the top support 30 connect to the side sections 20, and an opposite sixth end 32. At the sixth end 32 the top support 30 comprises a top cover 35, wherein the top cover 35 is configured for supporting a wind turbine support equipment (not shown here), wherein the wind turbine support equipment is configured for holding a further wind turbine component (also not shown here).

Figure 1b illustrates the embodiment of the modular transport system illustrated in fig. 1a. In this illustration the side sections 20 hover over the base support 10 and the top support 30 hover over the side sections 20, i.e., an exploded view.

Fig. 1b illustrates the coupling interfaces 40 arranged on the base support 10 at the second end 12, wherein the coupling interfaces 40 are configured for connecting and interlocking with coupling interfaces 40 arranged on the side sections 20 at the third end 21.

The two side sections 20 comprise a second set of coupling interfaces 40 arranged at the fourth end 22, wherein the second set of coupling interfaces 40 are configured for connecting and interlocking with coupling interfaces 40 arranged on the top support 30 at the fifth end 31.

The coupling interfaces 40 on the base support 10, the side sections 20 and the top support 30 are used to assemble and disassemble the modular transport system 1.

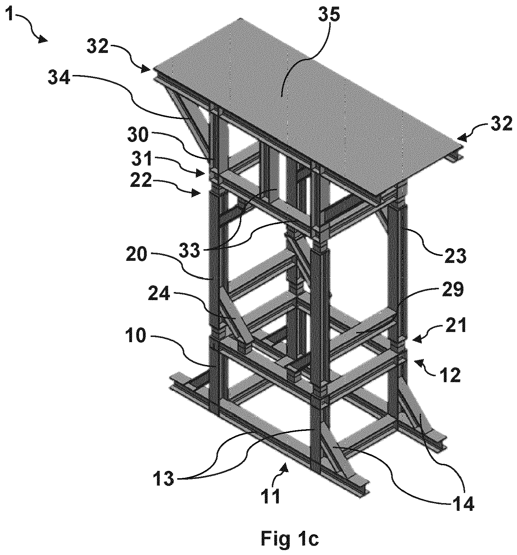

Figure 1c illustrates another embodiment of the modular transport system 1, wherein the modular transport system 1 comprises a base support 10, two side sections 20 and a top support 30 assembled and connected together.

The base support 10 comprises a plurality of beams 13 welded together to form the base support 10. At least two beams 13 extend beyond a square of beams arranged at the first end 11, the two beams 13 extending out are supported by base trusses 14 extending between the beams 13 and vertical beams, wherein the vertical beams are substantially parallel with a vertical axis, wherein the vertical axis is parallel to the side section length (not shown here).

Each side sections 20 comprise two side beams arranged substantially parallel to the side section length and extending between the third end 21 and the fourth end 22. The side beams are joined by a third side beam 29 arranged in-between the two side beams 23, wherein the third side beam 29 is substantially perpendicular to the side section length and the side beams 23. Furthermore, each side section 20 comprises two first trusses 24 extending out and away from the side beams 23 and towards the third end 21 and two second trusses 25 extending out and away from the side beams 23 and towards the fourth end 22. The first trusses 24 and second trusses 25 are configured for providing more support to the top support 30 and spread the load of the side beams 23 onto the base support 10. The first trusses 24 and second trusses 25 connect to the base support 10 at the second end 12 and to the top support 30 at the fifth end 31, respectively. The connection from the first trusses 24 and the second trusses 25 are preferably the coupling interfaces.

The top support 30 comprises a top cover 35 which extends outwards from the square defined by the four outer coupling interfaces of the top support 30. The extension of the top cover 35 is supported by beams 33 running below the top cover 35 and top trusses 34 supporting the top cover 35.

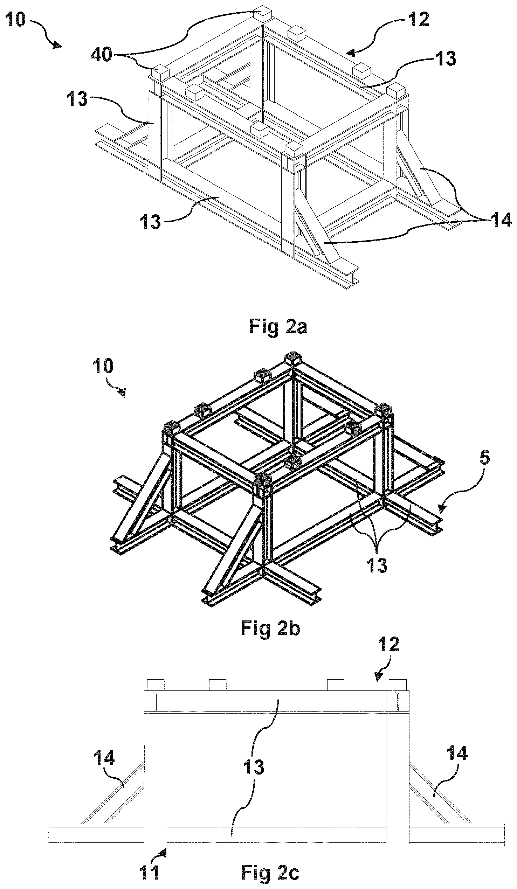

Figure 2a illustrates one embodiment of a base support 10 comprising a plurality of beams 13 joined together by welding into squares, the arrangement of the beams 13 and squares improves the strength to weight ratio of the base support 10. The base support 10 is supported by base trusses 14. The second end 12 of the base support 10 is arranged with a plurality of coupling interfaces 40 configured for connecting and interlocking with the side sections or a top support.

Figure 2b illustrates another embodiment of a base support 10 comprising additional beams 13 arranged along the surface 5 configured for increasing the stability and load distribution of the base support 10.

Figure 2c illustrates a side view of one embodiment of a base support 10.

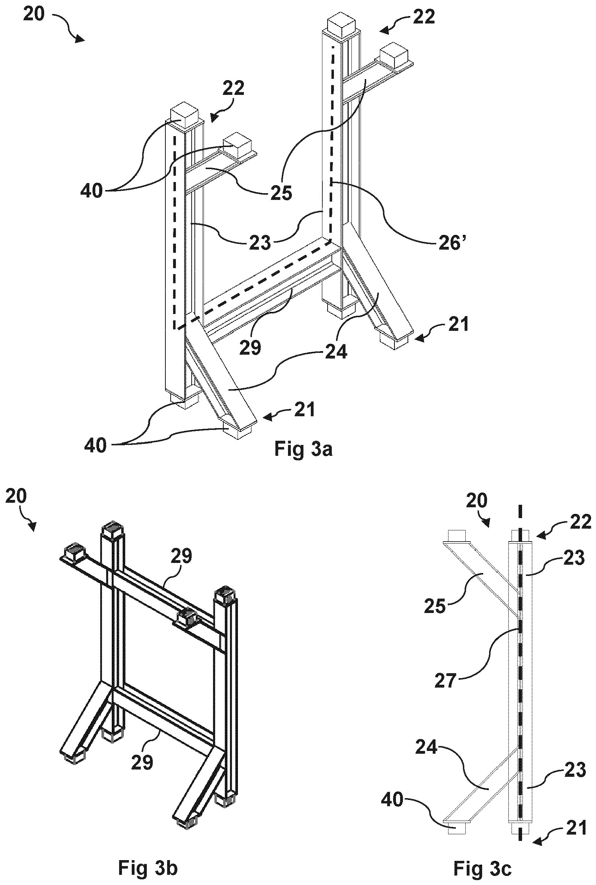

Figure 3a illustrates one embodiment of a side section 20 comprising two side beams 23 arranged parallel to each other and each having a third end 21 and an opposite fourth end 22. At the two ends 21, 22 a plurality of coupling interfaces 40 are arranged. The coupling interfaces 40 are configured for connecting the side section 20 to the base support 10 and the top support 30 by engaging with other coupling interfaces.

Between the two side beams 23 a third beam 29 is arranged, the third beam 29 is arranged perpendicular to the two side beams 23. The third side beam 29 increases the strength and stability of the side section 20 as a U-frame 26' is formed.

Fig. 3a further illustrates fist trusses 24 and second trusses 25 both extending from each side beam 23. The first trusses 24 extend from the side beams 23 outwards and towards the third end 21 and the second trusses 25 extend from the side beams 23 outwards and towards the fourth end 22. At the ends of the first trusses 24 and the second trusses 25 at the corresponding third end 21 and the fourth end 22 a coupling interface 40 is arranged. The coupling interfaces 40 are provided on the first and second trusses 24, 25 so that it is easy and fast to connect and interlock the side sections 20 to the base support and the top support. Furthermore, by connecting the first and second trusses 24, 25 to the corresponding base support and the top support the strength and stability of the modular transport system is increased while the amount of materials required to produce a strong construction is reduced.

Figure 3b illustrates another embodiment of a side section 20 comprising two third beams 29, wherein the additional third beam 29 is arranged between the two side beams and closer to the fourth end than the first third beam 29.

Figure 3c illustrates a side view of one embodiment of the side section 20 comprising side beams 23, first trusses 24 and a second trusses 25. The side beams 23 extend along the side section length 27 and is terminated by coupling interfaces at the third end 21 and the fourth end 22. The first trusses 24 and second trusses 25 extend away and outwards from the side beams 23 and towards the third end 21 and fourth end 22, respectively, where the trusses 24, 25 are also terminated by coupling interfaces 40. The first trusses 24 and second trusses 25 are arranged with an angle relative to the side beams, wherein the angle is measured between the trusses 24, 25 and the side beams 23. The angle is 45 degrees in this embodiment.

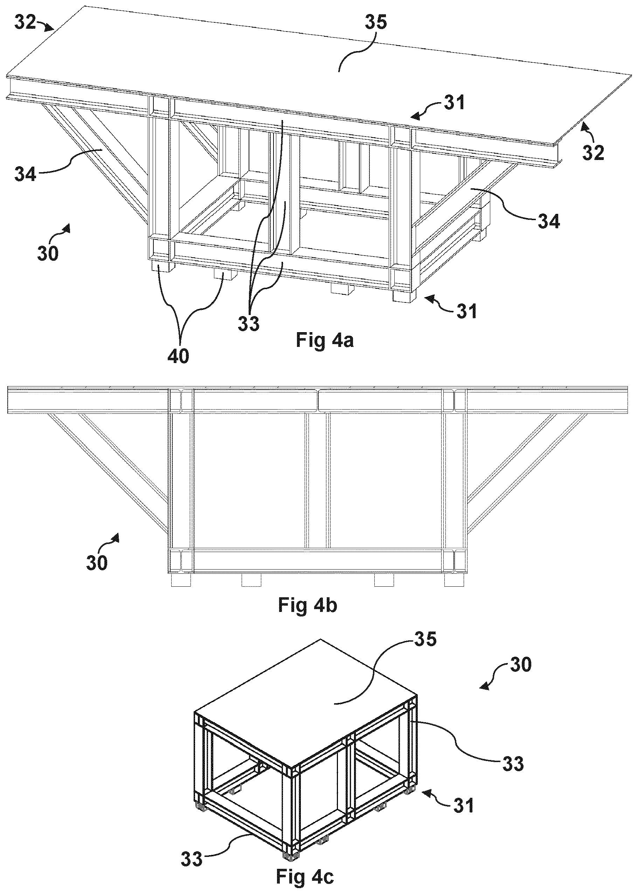

Figure 4a illustrates one embodiment of a top support 30 comprising a plurality of beams 33 welded together to provide the structure of the top support 30. At the sixth end 32 of the top support 30 a top cover 35 is provided. At the fifth end 31 being opposite to the sixth end 32 a plurality of coupling interfaces 40 are arranged, the coupling interfaces 40 are configured to connect and interlock with side sections or the base support.

The top support 30 is provided with a plurality of top trusses 34 which extend between beams 33 and are configured for increasing the strength of the top support 30. The top trusses 34 provide additional support to the top cover 35 while saving space below the top trusses 34.

Figure 4b illustrates a side view of one embodiment of a top support 30.

Figure 4c illustrates another embodiment of a top support 30 comprising a top cover 35, wherein the top cover 35 has an equal surface area relative to a square of beams 33 arranged parallel to the top cover 35 at the fifth end 31.

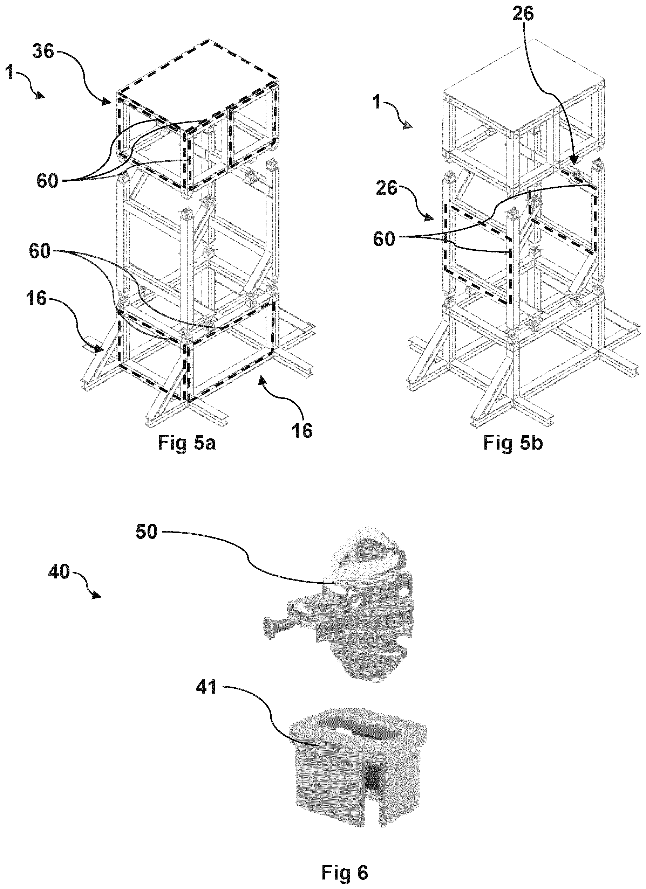

Figure 5a and 5b illustrate one embodiment of the modular transport system 1, wherein the modular transport system comprises rigid frames 16, 26, 36 where each rigid frames are three-dimensional constructions comprising a plurality of beams, side beams and/or third side beams, welded together to provide the base support, the side sections and the top support. The rigid frames 16, 26, 36 comprises one or more frame squares 60, wherein the multiple frame squares 60 are welded together perpendicular to each other, so that e.g. a box-shape is achieved.

In a further embodiment of the modular transport system 1, as illustrated in fig. 1c, the modular transport system comprises the rigid frames 16, 36 as illustrated in fig. 5a and the side section 20 with the U-frame as illustrated in fig. 3a.

Figure 6 illustrates one embodiment of a coupling interface 40 comprising a corner casting 41 and a twistlock 50. The twistlock 50 is configured to engage the corner casting 41 and releasably interlock with the corner casting in an unlocked position and a locked position. The twistlock 50 is configured for engage with a further corner casting 41 at a side being opposite to the side facing the corner casting 41 in this illustration.

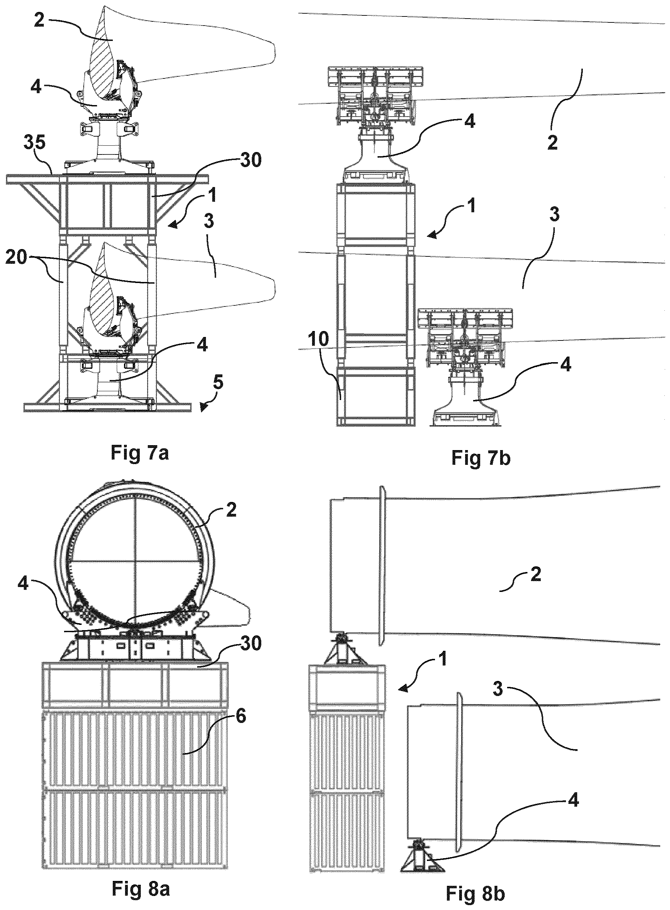

Figure 7a and 7b illustrate one embodiment of a modular transport system 1 supporting a wind turbine support equipment 4 holding a wind turbine component 2, wherein the wind turbine component 2 is a wind turbine blade and wherein the wind turbine support equipment 4 is arranged on the top cover 35 of the top support 30 of the modular transport system 1. Furthermore, between the side sections 20 of the modular transport system 1 a further wind turbine component 3 is arranged. The further wind turbine component is also a wind turbine blade and is arranged in a wind turbine support equipment 4 which is arranged adjacent to the base support 10 of the modular transport system 1. Fig. 7a and 7b illustrates how the modular transport system 1 can advantageously be used to make one or more customised wind turbine support equipment stackable, so that space is saved when transporting and storing multiple wind turbine components 2, 3.

Figure 8a and 8b illustrates one embodiment of a modular transport system supporting a wind turbine component 2 arranged on a wind turbine support equipment 4, wherein the modular transport system comprises a top support 30 arranged on a container 6, wherein the container 6 is a standard shipping container and wherein the top support 30 is connected and interlocked with the container 6 by use of the coupling interfaces (40, not shown here). In these illustrations, the wind turbine support equipment 4 are root end mounting equipment for a wind turbine blade. Fig. 8b illustrates like fig. 7b how a further wind turbine component 3 is arranged below the first wind turbine component 2 on another wind turbine support equipment 4, which is possible due to the modular transport system 1.

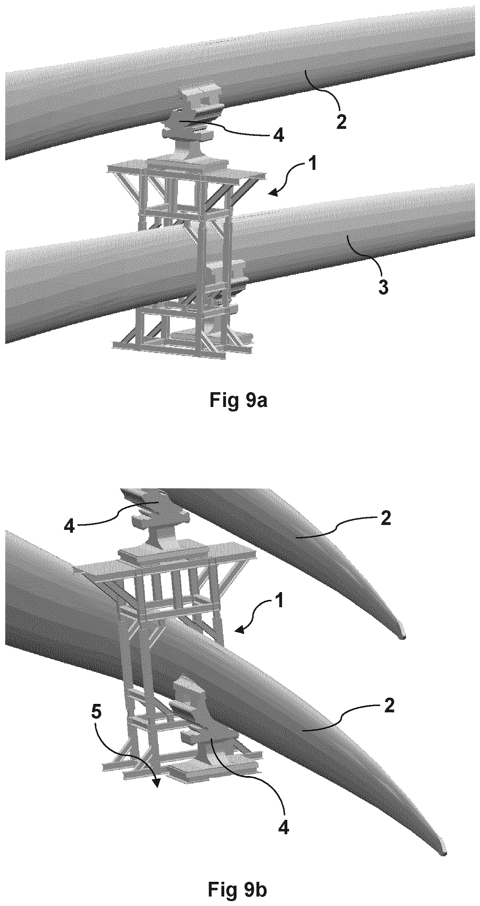

Figure 9a and 9b illustrates a further perspective view of an embodiment of the modular transport system 1 being used together with wind turbine support equipment 4 to support one wind turbine component 2 on top of the modular transport system 1 and a further wind turbine component 3 arranged below the first wind turbine component 2.

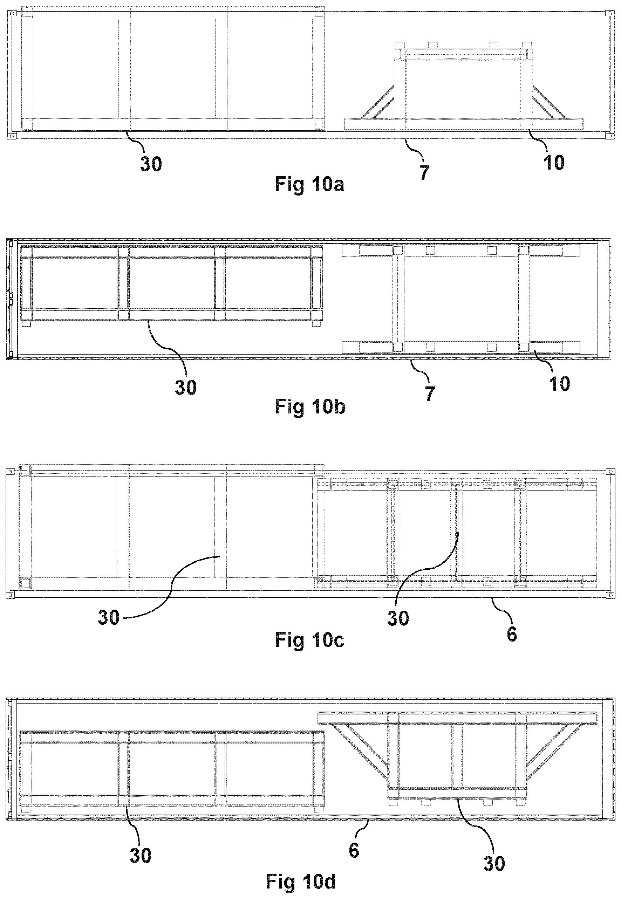

Figure 10a and 10b illustrate a side view and a top view of an open-top container 7, respectively. Inside the open-top container 7, a top support 30 and a base support 10 are arranged. The open-top container 7 may be a standard shipping container, e.g., a 40-foot container.

Figure 10c and 10d illustrate a side view and a top view of an open-top container 7, respectively. Inside the open-top container 7, two different embodiments of a top support 30 are arranged.

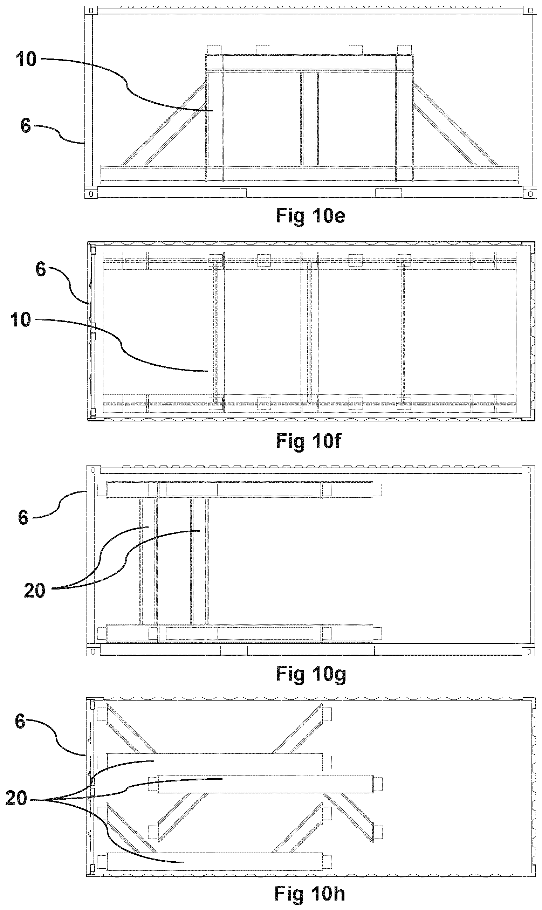

Figure 10e and 10f illustrate a side view and a top view of a container 6, respectively. The container 6 comprises a base support 10 arranged inside the container 6. The container 6 may be a standard shipping container, e.g., a 20-foot container.

Figure 10g and 10h illustrate a side view and a top view of a container 6, respectively. The container 6 comprises three side sections 20 arranged inside the container 6.

## Claims

1. A modular transport system (1) for supporting a wind turbine component (2) arranged in a wind turbine support equipment (4) during transport and storage, wherein the modular transport system (1) comprises:
- a base support (10) configured for distributing a load onto a surface (5) at a first end (11), wherein the base support (10) comprises a plurality of coupling interfaces (40) arranged at a second end (12) being opposite to the first end (11) and wherein the coupling interfaces (40) are configured for releasably interlocking with another plurality of coupling interfaces (40);
- two side sections (20) each comprising a plurality of coupling interfaces (40) arranged at a third end (21) of the side section (20) and another plurality of coupling interfaces (40) arranged at a fourth end (22) being opposite to the third end (21), wherein the third end (21) and the fourth end (22) are separated by a side section length (27); and
- a top support (30) comprising a plurality of coupling interfaces (40) arranged at a fifth end (31) and a top cover (35) arranged at a sixth end (32) being opposite to the fifth end (31) and wherein the top cover (35) is configured for supporting the wind turbine support equipment (4),
wherein the top support (30) is configured for being connected to the two side sections (20), and wherein the two side sections (20) are configured for being connected to the base support (10) with a side section width (28) measured perpendicular to the side section length (27) separating the two side sections (20) so that a further wind turbine component (3) can be arranged in-between the side sections (20).

2. The modular transport system (1) according to claim 1, wherein the system comprises a plurality of twistlocks (50) and the coupling interfaces (40) are corner castings (41), wherein the coupling interfaces (40) are releasably interlocked by the twistlocks (50) being configured for being in an unlocked position and a locked position.

3. The modular transport system (1) according to claim 2, wherein a plurality of coupling interfaces (40) being arranged at the second end (12) of the base support (10) and/or at the fourth end (22) of the side sections (20) comprise a permanent twistlock being configured for releasably interlocking the side sections (20) to the base support (10) and/or the top support (30) to the side sections (20).

4. The modular transport system (1) according to any one of the preceding claims, wherein each side section (20) is made of at least two side beams (23) arranged parallel along the side section length (27) and separated by a side section spacing being perpendicular to the side section length (27) and the side section width (28), wherein at least one third side beam (29) is arranged between the two side beams (23) and arranged perpendicular to the two side beams (23).

5. The modular transport system (1) according to any one of the preceding claims, wherein the base support (10), the side sections (20) and/or the top support (30) is made of a plurality of beams (13, 33) arranged in a rigid frame (16, 36), wherein the rigid frame (16, 36) comprises at least one frame square (60) constructed of at least four beams (13, 33), wherein one or more frame squares (60) are arranged perpendicular and/or parallel to each other.

6. The modular transport system (1) according to any one of the preceding claims, wherein the side sections (20) comprise at least two first trusses (24) supporting the side section at the third end (21) and at least two second trusses (25) supporting the side section at the fourth end (22), wherein the first and second trusses (24, 25) extend outwards from the side section length (27) and towards the respective third and fourth end (21, 22).

7. The modular transport system (1) according to claim 6, wherein the first trusses (24) and the second trusses (25) each comprise coupling interfaces(40) arranged at the third end (21) and the fourth end (22), respectively.

8. The modular transport system (1) according to any one of the preceding claims, wherein the base support (10) comprises one or more base trusses (14) configured for distributing the load onto the surface (5).

9. The modular transport system (1) according to any one of the preceding claims, wherein the top support (30) comprises one or more top trusses (34) configured for distributing a load of the wind turbine component (2) on the top cover (35) onto the second connectors (50) of the top support (30).

10. The modular transport system (1) according to any one of claims 4 to 9, wherein the one or more beams (13, 23, 33), the third side beams (29), the first trusses (24), the second trusses (25), the base trusses (14) and/or the top trusses (34) are made of I-beams or H-beams.

11. The modular transport system (1) according to any one claims 4 to 10, wherein the beams (13, 23, 33), third side beams (29), the first trusses (24), the second trusses (25), the base trusses (14) and/or the top trusses (34) are made of steel.

12. The modular transport system (1) according to any one of the preceding claims, wherein the top support (30) is adapted for being connected to the base support (10). [desc: allows an intermediate storage height being between the height of the base support and the top support arranged on two side sections]

13. The modular transport system (1) according to any one of the preceding claims, wherein the base support (10), the side sections (20) and/or the top support (30) are disassembled and packed in a container (6).
